# EUROPÄISCHE PATENTANMELDUNG

(11) **EP 2 096 293 A2**
(43) Veröffentlichungstag der Anmeldung: **02.09.2009**
(21) Anmeldenummer: 09002537.0
(22) Anmeldetag: 23.02.2009
(51) Int. Cl.: F02K 3/077

(54) **Flugzeugtriebwerk mit mehreren Gebläsen**

(30) Priorität: 28.02.2008 DE 102008011643
(71) Anmelder: Rolls-Royce Deutschland Ltd & Co KG, 15827 Blankenfelde-Mahlow (DE)
(72) Erfinder: Gümmer, Volker, Dr.-Ing., 15831 Mahlow (DE)
(74) Vertreter: Weber, Joachim

(57) **Zusammenfassung**

Die Erfindung bezieht sich auf eine Flugzeugantriebseinheit mit einem Gasturbinenkerntriebwerk 10 und zumindest jeweils einem Verdichter, einer Brennkammer und einer eine Hauptwelle 11 antreibenden Turbine, **dadurch gekennzeichnet, dass** die Hauptwelle 11 des Gasturbinenkerntriebwerks 10 über eine mechanische Antriebsverbindung mit zumindest zwei separaten Gebläsen 6-9 betriebsverbunden ist, welche jeweils neben dem Gasturbinenkerntriebwerk 10 angeordnet sind.

## Beschreibung

Die Erfindung bezieht sich auf eine Flugzeugantriebseinheit gemäß dem Oberbegriff des Anspruchs 1.

Im Einzelnen bezieht sich die Erfindung auf eine Flugzeugantriebseinheit mit einem Gasturbinenkerntriebwerk mit zumindest jeweils einem Verdichter, einer Brennkammer und einer eine Hauptwelle antreibenden Turbine.

Flugtriebwerke nach dem Stand der Technik besitzen in ihrer Frontalansicht einen im Wesentlichen kreisförmigen Umriss. Der kreisförmige Umriss ergibt sich aus der konzentrischen Anordnung der Triebwerkkomponenten, der konzentrischen Anordnung der verwendeten Wellen und der Verwendung lediglich eines einzigen Fans oder Propellers. So ist bei heute üblichen Fan-Triebwerken die Niederdruckwelle, über die der Fan (Gebläse) von einer Turbine angetrieben wird, in derselben Drehachse gelagert wie die Hochdruckwelle des Kerntriebwerks (Hochdruckverdichter, Brennkammer, Hochdruckturbine).

Fan-Triebwerke nach dem Stand der Technik besitzen nur ein einziges Fan-Modul, dessen Durchmesser bei dem Bestreben, das Nebenstromverhältnis und somit den Vortriebswirkungsgrad des Triebwerks zu steigern, in der Vergangenheit kontinuierlich erhöht wurde.

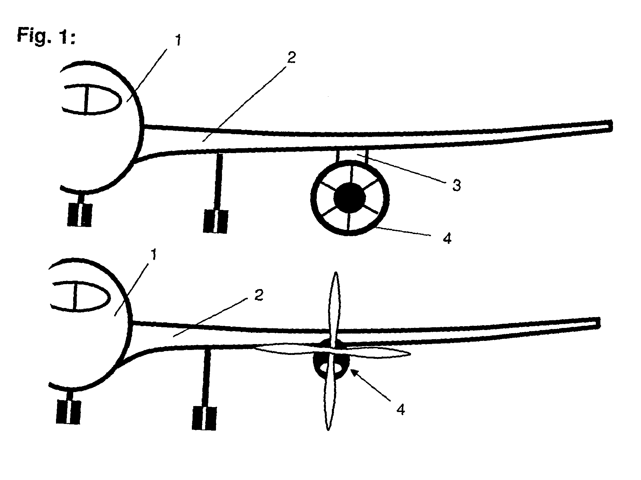

Bei üblicher Bauweise von Fan-Triebwerken lässt sich ein noch größeres Nebenstromverhältnis kaum noch realisieren. Zudem übersteigt der Außendurchmesser des Fan-Triebwerkes Werte, die eine von den Flugzeugherstellern bevorzugte Anordnung des Triebwerks unter dem Flügel noch zulassen würden, siehe Fig. 1, oben.

Ein bekannte Möglichkeit, der Limitation des Nebenstromverhältnisses und der Unterflügelanordnung zu umgehen ist der Übergang zu Propellertriebwerken, deren Durchmesser allerdings ebenfalls schnell günstig installierbare Abmessungen überschreiten (siehe Fig.1, unten) und zudem starken Lärm erzeugen.

Es ergibt sich somit der Nachteil, dass die Triebwerkskonfigurationen nach dem Stand der Technik, insbesondere in Bezug auf ihre Hochachse, die Grenze realisierbarer und am Flugzeug installierbarer Außenabmessungen erreicht haben. Eine Steigerung des Nebenstromverhältnisses, das den Kraftstoffverbrauch von Triebwerken wesentlich mit bestimmt, kann deshalb bei Bauweisen nach dem Stand der Technik nicht erzielt werden.

Die DE-AS 1 264 159 zeigt ein Schubaggregat mit zumindest zwei Gaserzeugern und einem oder mehreren Gebläsen. Ein Teil der Abgase der zumindest zwei Gaserzeuger wird verwendet, um die Gebläse anzutreiben. Die einzelnen Gaserzeuger können separat in Betrieb genommen werden, um die Schubwerte und den spezifischen Brennstoffverbrauch einzustellen.

Der vorliegenden Erfindung liegt die Aufgabe zugrunde, ein Flugtriebwerk der eingangs genannten Art zu schaffen, welches unter Vermeidung der Nachteile des Standes der Technik eine wirkungsvolle Senkung des realisierbaren Kraftstoffverbrauches erreicht.

Erfindungsgemäß wird die Aufgabe durch die Merkmalkombination des Hauptanspruchs gelöst, die Unteransprüche zeigen weitere vorteilhafte Ausgestaltungen der Erfindung.

Im Einzelnen betrifft somit die Erfindung eine Flugantriebseinheit mit Multi-Fan-Anordnung, die ein weit gesteigertes Nebenstromverhältnis bei weiterhin für das Flugzeug günstigen Abmessungen gestattet und sich im Wesentlichen dadurch auszeichnet, dass:
- die erforderliche Leistung durch ein einziges Gasturbinenkerntriebwerk, mindestens bestehend aus einem Hochdruckverdichter, einer Brennkammer und einer Hochdruckturbine, erzeugt wird und die Leistung an einem der Enden des Gasturbinenkerntriebwerks über eine drehende Hauptwelle zur Verfügung gestellt wird,
- die an der Hauptwelle bereitgestellte Leistung mit Hilfe eines Getriebes auf mindestens zwei Hilfswellen aufgeteilt wird, wobei über jede der Hilfswellen eine Teilleistung mit Hilfe eines weiteren Getriebes an die Welle einer Fan-Einheit mit ummantelter Bauart übertragen wird,
- die mindestens zwei Fan-Einheiten und das Gasturbinenkerntriebwerk durch eine ein- oder mehrteilige gemeinsame Rahmenstruktur miteinander verbunden sind und somit eine kompakte Flugantriebseinheit bilden, wobei jede Fan-Einheit mindestens eine Schaufelreihe von Rotorschaufeln oder auch mindestens zwei gegenläufige Rotorschaufelreihen aufweist und dabei ein- oder auch mehrstromig konfiguriert sein kann,
- die Multi-Fan-Flugantriebseinheit aufgrund ihrer Bauweise ohne weitgehende Integration in den Flügel oder den Rumpf am Flugzeug befestigt werden kann,
- die Luft für das Gasturbinenkerntriebwerk entweder durch einen zwischen den Fan-Einheiten angeordneten Außenstaueinlauf zugeführt wird oder in Strömungsrichtung hinter einer Rotor- oder Statorschaufelreihe durch eine Öffnung am Strömungspfad am äußeren Strömungspfadrand oder aber an im Strömungspfad stehenden Elementen, wie Statorschaufeln oder Streben, mindestens einer Fan-Einheit entnommen und durch einen gekrümmten Kanal zugeführt wird,
- der Luftstrom nach Passieren einer Fan-Einheit jeweils eine separate im wesentlichen mit der Fan-Achse konzentrischen Düse in die Umgebung gelangt oder die Austrittsluftströme der Fan-Einheiten in einem gemeinsamen Strömungspfad oder auch durch Wandungen getrennt umhüllend am Gasturbinenkerntriebwerk entlang geleitet und mit dem Heissgasstrahl zusammengeführt werden,
- die Drehachsen der Fan-Einheiten von der Drehachse des Gasturbinenkerntriebwerks im wesentlichen um den gleichen Abstand versetzt angeordnet sind,
- bei Bauweise als Doppel-Fan-Flugantriebseinheit die Drehmittelpunkte der Fan-Einheiten und des Gasturbinenkerntriebwerks eine gerade Linie bilden.

Im Folgenden wird die Erfindung anhand von Ausführungsbeispielen in Verbindung mit den Figuren beschrieben. Dabei zeigt:
- Fig.1:: Flugantriebseinheiten nach dem Stand der Technik,
- Fig.2a:: Erfindungsgemäße Flugantriebseinheiten,
- Fig.2b:: Weitere erfindungsgemäße Flugantriebseinheit,
- Fig.3:: Erfindungsgemäße Doppel-Fan-Flugantriebseinheit, Frontansicht, außen angeordneter mittiger Staueinlauf zum Kerntriebwerk,
- Fig.4:: Erfindungsgemäße Doppel-Fan-Flugantriebseinheit, Frontansicht, seitliche Staueinläufe hinter dem Fan zum Kerntriebwerk,
- Fig.5a:: Erfindungsgemäße Doppel-Fan-Flugantriebseinheit, Frontansicht, verdeckte seitliche Einläufe hinter dem Fan zum Kerntriebwerk,
- Fig.5b:: Erfindungsgemäße Doppel-Fan-Antriebseinheit, Schnitt A-A, lange Düsen mit Strahlzusammenführung,
- Fig.5c:: Erfindungsgemäße Doppel-Fan-Antriebseinheit, Schnitt A-A, separate Düsen,
- Fig.5d:: Erfindungsgemäße Doppel-Fan-Antriebseinheit, Schnitt B-B, Rahmenstruktur und Antriebswellen.

Die Fig.1 zeigt den Stand der Technik, bei welchem an einem Flugzeugrumpf 1 in üblicher Weise ein Flügel angeordnet ist, der mittels einer Strebe ein Triebwerk 4 trägt. Dieses kann ein Fan-Triebwerk oder ein Turboprop-Triebwerk sein.

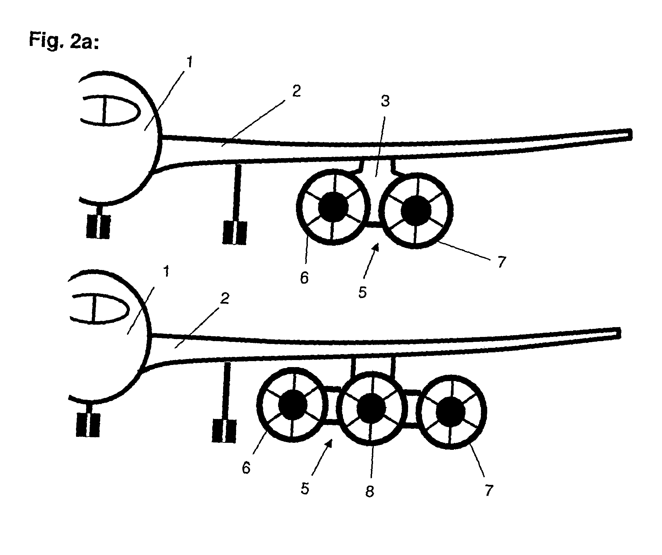

Die Fig.2a, oben zeigt die rechte Hälfte eines Flugzeuges mit Flügel und einer unter dem Flügel angebrachten erfindungsgemäßen Flugantriebseinheit mit einem Kerntriebwerk 10 und zwei Fan-Einheiten/Gebläsen bzw. Gebläseeinheiten 6, 7.

Die Fig.2a unten zeigt die rechte Hälfte eines Flugzeuges mit Flügel und einer unter dem Flügel angebrachten erfindungsgemäßen Flugantriebseinheit mit einem Kerntriebwerk 10 und drei Fan-Einheiten/Gebläsen bzw. Gebläseeinheiten 6, 7, 8.

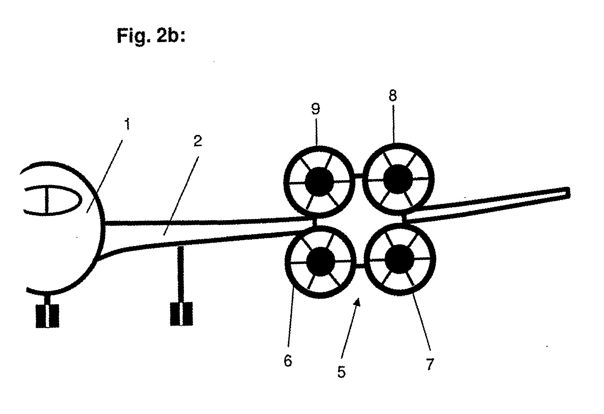

Die Fig.2b zeigt die rechte Hälfte eines Flugzeuges mit Flügel und einer unter dem Flügel angebrachten erfindungsgemäßen Flugantriebseinheit mit einem Kerntriebwerk 10 und vier Fan-Einheiten/Gebläsen bzw. Gebläseeinheiten 6, 7, 8, 9.

Die erfindungsgemäßen Flugzeugantriebseinheiten können erfindungsgemäß auch anders als hier gezeichnet über dem Flügel oder am Rumpf des Flugzeuges angebracht werden.

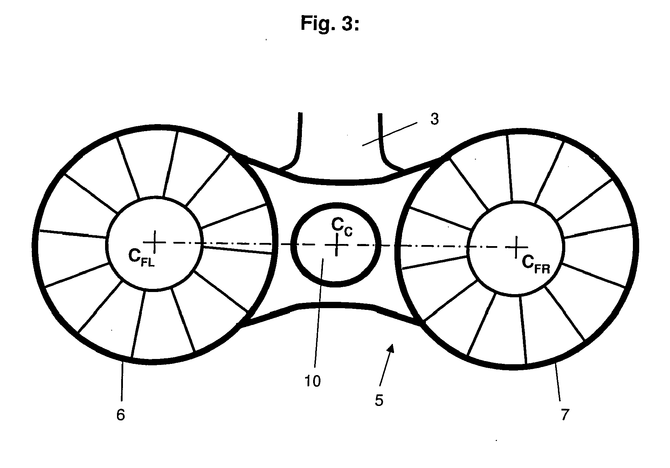

Die Fig.3 zeigt in vergrößerter Darstellung eine erfindungsgemäße Flugantriebseinheit mit Doppel-Fan, also zwei vom Kerntriebwerk 10 angetriebenen Fan-Einheiten 6, 7 (Gebläsen). Die Drehachse des linken Fans ist mit CFL, die Drehachse des rechten Fans ist mit CFR und die Drehachse des Kerntriebwerks ist mit CC gekennzeichnet. In der hier dargestellten Konfiguration bilden CFL, CFR und CC eine gerade Linie. Es kann unter Umständen besonders vorteilhaft sein, dass das Kerntriebwerk 10, wie hier gezeigt, seine Luft über einen außen zwischen den Fan-Einheiten 6, 7 (Gebläsen) angeordneten Staueinlauf ansaugt.

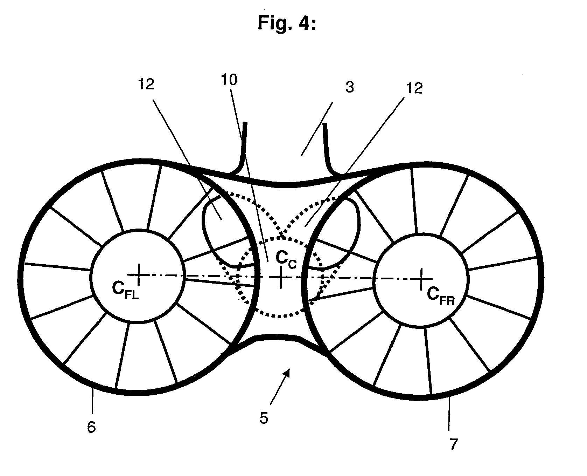

Die Fig.4 zeigt in vergrößerter Darstellung eine ebenfalls erfindungsgemäße Flugantriebseinheit mit Doppel-Fan. Die Drehachsen CFL, CFR und CC bilden auch hier eine gerade Linie. Allerdings ist hier vorgesehen, dass das Kerntriebwerk 10 seine Luft über mindestens einen Staueinlauf ansaugt, der am Rand des Strömungspfades einer Fan-Einheit 6, 7 (Gebläsen) angeordnet ist. Vom Staueinlauf wird die Luft über einen gekrümmten Strömungskanal 12 dem Kerntriebwerk 10 zugeführt.

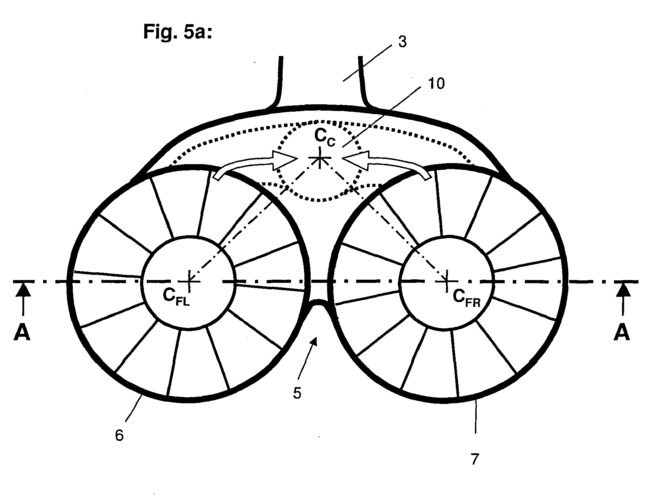

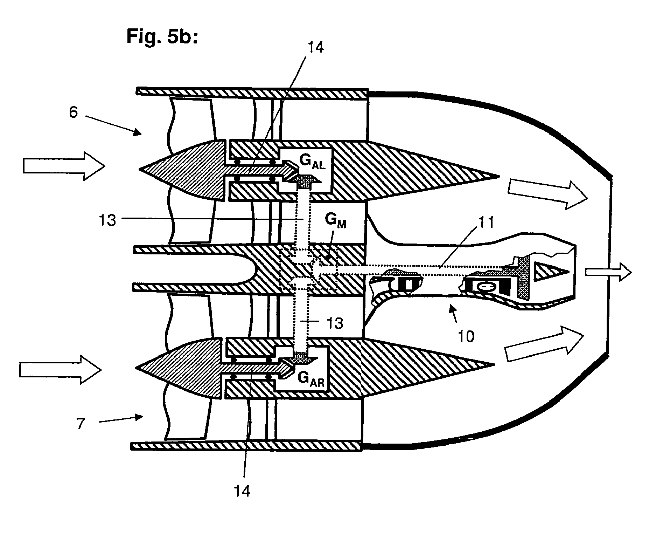

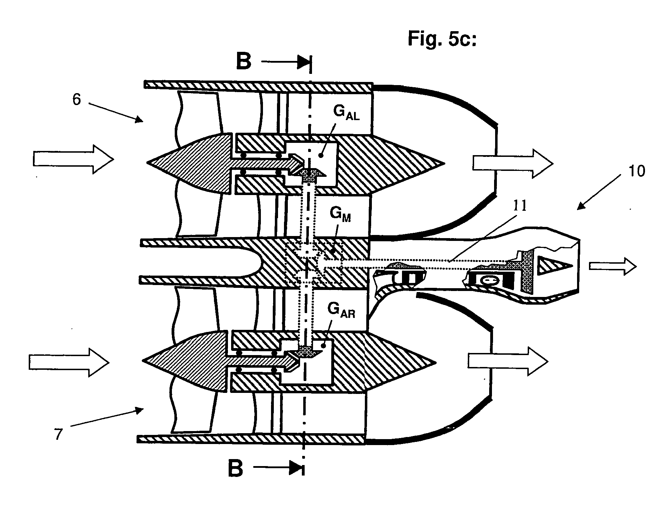

Die Fig.5a zeigt in vergrößerter Darstellung eine weitere erfindungsgemäße Flugantriebseinheit mit Doppel-Fan. Die Drehachsen CFL, CFR sind hier mit gleichem Abstand gegenüber der Drehachse CC versetzt. So ergibt sich zwischen ihnen ein gleichschenkliges Dreieck. Hier ist vorgesehen, dass das Kerntriebwerk 10 seine Luft über mindestens einen Einlauf ansaugt, der als nicht vorstehende Öffnung am Rand des Strömungspfades einer Fan-Einheit (Getriebe) 6, 7 angeordnet ist. Von der Einlauföffnung wird die Luft über einen gekrümmten Strömungskanal dem Kerntriebwerk zugeführt. Weiterhin ist in diesem Bild die Ansicht A-A definiert, in der die erfindungsgemäße Lösung in den Figuren 5b und 5c in weiterem Detail dargestellt wird.

Die Fig.5b zeigt die erfindungsgemäße Flugantriebseinheit mit Doppel-Fan im Schnitt A-A, der geradlinig durch die zwei Achsen der Fan-Einheiten (Getriebe) 6, 7 verläuft. Die hier gezeichnete Konfiguration der Fan-Einheiten (Getriebe) 6, 7 mit einem Rotor, einem Stator und einer Strukturstrebe ist nur beispielhaft. Jede andere Konfiguration von Schaufelreihen, die eine Förderung von Luft durch den Strömungspfad der Fan-Einheit (Getriebe) 6, 7 erlauben, sind erfindungsgemäß möglich, einschließlich Anordnungen mit einer Verstellmöglichkeit für Rotor- oder Statorschaufeln. Das Gasturbinenkerntriebwerk liegt in dieser betrachteten Anordnung der Multi-Fan-Antriebseinheit nicht in der Schnittebene, sondern tiefer. Zur skizzenhaften Veranschaulichung seiner Komponenten, nämlich des Verdichters, der Brennkammer und der Turbine ist das Gehäuse an einigen Stellen aufgebrochen dargestellt. Das Kerntriebwerk ist hier zweiwellig gezeigt, mit Bereitstellung der Wellenleistung durch eine (separate) Niederdruckturbine.

Erfindungsgemäße Lösungen beinhalten jedoch ebenfalls eine mögliche Leistungsbereitstellung über eine einwellige oder gar dreiwellige Kerntriebwerkskonfiguration mit einer größeren oder kleineren Anzahl von Verdichtern und/oder Turbinen.

Vom Kerntriebwerk 10 wird über die Hauptwelle 11 Leistung an ein Zentralgetriebe GM weitergegeben, in dem eine Aufteilung auf zwei Hilfswellen 13 stattfindet. Das Zentralgetriebe GM, das hier schematisch und beispielhaft als Kegelradgetriebe ausgeführt ist, kann so beschaffen sein, dass sich für mindestens zwei Hilfswellen 13 ein gleicher oder auch gegenläufiger Drehsinn ergibt, wenn der Betrachter eine Blickrichtung entlang der jeweiligen Hilfswelle 13 hin zum Zentralgetriebe GM einnimmt.

Jede Hilfswelle 13 leitet jeweils einen Teil der Kerntriebwerksleistung an ein Hilfsgetriebe (hier GAL und GAR) weiter, das die Leistung auf die Welle 14 der jeweiligen Fan-Einheit 6, 7 überträgt.

Jedes Hilfsgetriebe (GAL und GAR) kann so beschaffen sein, dass sich für die jeweilige Antriebswelle 14 einer Fan-Einheit 6, 7 eine mit dem Uhrzeigersinn oder gegen den Uhrzeigersinn orientierte Rotationsrichtung ergibt, wenn die Flugantriebseinheit von vorn in Durchströmungsrichtung betrachtet wird. Alle Getriebe können der Unter- oder auch Übersetzung dienen. Auf diese Weise kann die Drehzahl der Fan-Einheiten 6, 7 ideal auf die Bedürfnisse des thermodynamischen Triebwerkprozesses abgestimmt werden.

Die Fan-Einheiten 6, 7 und das Kerntriebwerk 10 sind mit einer ein- oder mehrteiligen, aus metallischen oder Leichtbauwerkstoffen bestehenden Rahmenstruktur miteinander verbunden.

Die zur Leistungsverteilung vorgesehenen Getriebe sind erfindungsgemäß ebenfalls in besagter Rahmenstruktur vorgesehen.

Wie durch die großen Pfeile angedeutet, strömt die Luft von links in die Fan-Einheiten ein, und sofern das Kerntriebwerk einen Außeneinlauf besitzt, auch in dieses.

Die Luft durchströmt die Fan-Einheiten 6, 7 und wird einer Düse zugeführt. Wie hier gezeichnet, kann der Strömungskanal der Düse so vorgesehen sein, dass er sich als Hülle um das Kerntriebwerk 10 legt. Dabei können die Luftströme der Faneinheiten erfindungsgemäß ab einer bestimmten Position miteinander vermischt werden, bevor sie sich mit dem Heißgasstrahl des Kerntriebwerks zusammengeführt werden, oder aber durch Wandungen getrennt zum Düsenaustritt geführt werden.

Die Fig.5c zeigt die erfindungsgemäße Flugantriebseinheit mit Doppel-Fan im Schnitt A-A, jetzt mit einer erfindungsgemäß besonders günstigen Anordnung, in der jede Fan-Einheit eine separate Austrittsdüse besitzt. Die Luftströme der Faneinheiten 6, 7 verlassen hier ohne eine Zusammenführung untereinander oder mit dem Heißgasstrahl das Triebwerk.

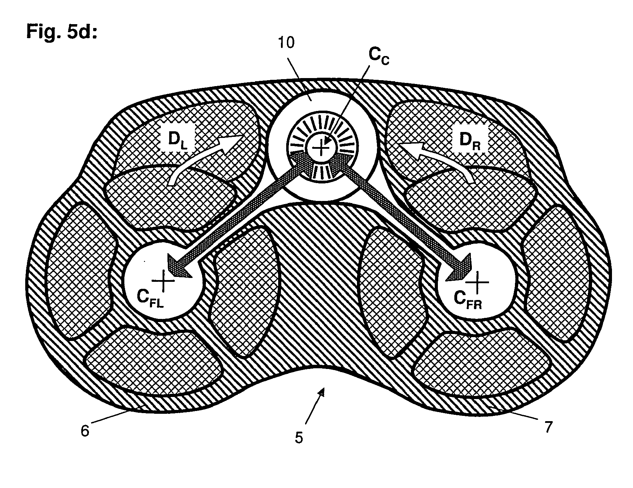

Die Fig.5d zeigt den Schnitt B-B, wie definiert in Fig.5c, durch die erfindungsgemäße Flugantriebseinheit mit Doppel-Fan. Die Strömungsquerschnitte der beiden Fan-Einheiten 6, 7 sind durch karierte Flächen markiert. Durch diese strömt Luft in die Zeichnungsebene hinein. Darüber und mittig angeordnet befindet sich die Drehachse CC des Kerntriebwerks 10, das allerdings im Schnitt B-B selbst noch nicht sichtbar ist. Das Kerntriebwerk 10 wird in der hier dargestellten Konfiguration, die nur eine der erfindungsgemäß möglichen Lösungen ist, durch zwei Übergangskanäle DL und DR mit Luft versorgt. Die Übergangskanäle DL und DR führen mit einem verwundenen Verlauf durch die Rahmenstruktur, vereinigen sich weiter stromab des Schnittes B-B (unterhalb der Zeichnungsebene) und gehen schließlich in den Strömungspfad des Kerntriebwerks 10 über. Die Luft wird in der hier gezeigten beispielhaften Darstellung durch jeweils eine Öffnung am Rand des Strömungspfades im Bereich zwischen zwei Streben einer Fan-Einheit 6, 7 entnommen.

Schematisch dargestellt ist die vom Kerntriebwerk 10 kommende Hauptwelle und die mit Hilfe eines Getriebes erreichte Aufteilung der Antriebsleistung auf die zwei Hilfswellen 13, von denen jeweils eine über ein weiteres Getriebe die Leistung an die Antriebswelle 14 (Drehachsen CFL und CFR) einer Fan-Einheit 6, 7 weitergibt. Mehrere Streben halten den jeweils inneren Teil der Rahmenstruktur, in dem die Welle und der Rotor der jeweiligen Fan-Einheit gelagert sind. die Streben sind hier so beschaffen, dass die Hilfswellen durch sie hindurch geführt werden können.

Die Erfindung lässt sich auch wie folgt in bevorzugten Kombinationen beschreiben:
Flugantriebseinheit mit Multi-Fan-Anordnung,
wobei die erforderliche Leistung durch ein einziges Gasturbinenkerntriebwerk, mindestens bestehend aus einem Verdichter, einer Brennkammer und einer Turbine, erzeugt wird und an einem der beiden Enden des Gasturbinenkerntriebwerks an einer drehenden Hauptwelle zum Antrieb mehrerer Fan-Einheiten zur Verfügung steht, und wobei bevorzugt
die an der Hauptwelle bereitgestellte Leistung mit Hilfe eines Getriebes (Zentralgetriebe) auf mindestens zwei Hilfswellen aufgeteilt wird, wobei über jede der Hilfswellen eine Teilleistung mit Hilfe eines weiteren Getriebes (Hilfsgetriebe) an die Antriebswelle einer Fan-Einheiten übertragen wird,
und wobei die mindestens zwei Fan-Einheiten und das Gasturbinenkerntriebwerk durch eine ein- oder mehrteilige gemeinsame Rahmenstruktur miteinander verbunden sind und somit eine kompakte Flugantriebseinheit bilden, wobei jede Fan-Einheit mindestens eine Schaufelreihe von Rotorschaufeln oder auch mindestens zwei gegenläufige Rotorschaufelreihen aufweist und dabei ein- oder auch mehrstromig konfiguriert sein kann,
und wobei mindestens eines der zur Leistungsverteilung notwendigen Getriebe innerhalb der besagten Rahmenstruktur vorgesehen ist,
und wobei das Zentralgetriebe so beschaffen ist, dass sich bei Betrachtung der einzelnen Hilfswellen entlang ihrer Achse auf das Zentralgetriebe hin eine gleichsinnige Drehrichtung mindestens zweier Hilfswellen ergibt,
und wobei das Zentralgetriebe so beschaffen ist, dass sich bei Betrachtung der einzelnen Hilfswellen entlang ihrer Achse auf das Zentralgetriebe hin eine gegensinnige Drehrichtung mindestens zweier Hilfswellen ergibt,
und wobei die einzelnen Hilfsgetriebe so beschaffen sind, dass sich bei Betrachtung der Flugantriebseinheit von vorn in Durchströmungsrichtung ein gegenläufiger Drehsinn mindestens zweier Fan-Antriebswellen ergibt,
und wobei die einzelnen Hilfsgetriebe so beschaffen sind, dass sich bei Betrachtung der Flugantriebseinheit von vorn in Durchströmungsrichtung ein gleichläufiger Drehsinn mindestens zweier Fan-Antriebswellen ergibt,
und wobei die Multi-Fan-Flugantriebseinheit aufgrund seiner Bauweise ohne weitgehende Integration in den Flügel oder den Rumpf am Flugzeug angebracht werden kann,
und wobei die Drehachsmittelpunkte der Fan-Einheiten vom Drehachsmittelpunkt des Gasturbinenkerntriebwerks im wesentlichen um den gleichen Abstand versetzt angeordnet sind,
und wobei die Drehachsmittelpunkte der Fan-Einheiten und des Gasturbinenkerntriebwerks eine gerade Linie bilden,
und wobei die Luft für das Gasturbinenkerntriebwerk durch einen zwischen den Fan-Einheiten angeordneten Außenstaueinlauf zugeführt wird und durch einen Kanal zum Eintritt des Gasturbinenkerntriebwerks geführt wird,
und wobei die Luft für das Gasturbinenkerntriebwerk im Inneren mindestens einer Fan-Einheit stromab einer Rotor- oder Statorschaufelreihe durch mindestens eine Öffnung am Strömungspfad entnommen und durch einen gekrümmten Kanal zum Eintritt des Gasturbinenkerntriebwerks geführt wird,
und wobei die Luft für das Gasturbinenkerntriebwerk durch mindestens eine Öffnung an im Strömungspfad stehenden Elementen wie Statorschaufeln oder Streben entnommen und durch einen gekrümmten Kanal zum Eintritt des Gasturbinenkerntriebwerks geführt wird,
und wobei der Luftstrom nach Passieren einer Fan-Einheit jeweils durch eine separate Düse in die Umgebung gelangt,
und wobei die Düse im wesentlichen mit der Fan-Achse konzentrisch verläuft,
und wobei der Luftstrom nach Passieren einer Fan-Einheit durch einen Kanal am Gasturbinenkerntriebwerk entlang weitergeleitet wird und der Luftstrom das Gasturbinenkerntriebwerk wenigstens teilweise umhüllt,
und wobei die Austrittsluftströme mindestens zweier Fan-Einheiten in der Umgebung des Gasturbinenkerntriebwerks vereinigt werden,
und wobei die Austrittsluftströme mindestens zweier Fan-Einheiten durch Wandungen getrennt am Gasturbinenkerntriebwerk entlang geleitet werden,
und wobei die Austrittsluftströme soweit am Gasturbinenkerntriebwerk entlang geleitet werden, dass sie mit dem Heißgasstrahl des Gasturbinenkerntriebwerks vermischt werden können.

Die in vorliegender Erfindung spezifizierte Multi-Fan-Flugantriebseinheit ermöglicht durch einfache Maßnahmen ein bislang unerreicht hohes Nebenstromverhältnis und einen entsprechend hohen Vortriebswirkung. Der spezifische Kraftstoffverbrauch eines Triebwerks sinkt um etwa 20%.

### Bezugszeichenliste

- 1: Flugzeugrumpf
- 2: Flügel
- 3: Strebe
- 4: Triebwerk
- 5: Flugzeugantriebseinheit
- 6-9: Gebläse
- 10: Gasturbinenkerntriebwerk
- 11: Hauptwelle
- 12: Gekrümmter Strömungskanal
- 13: Hilfswelle
- 14: Welle

## Patentansprüche

1. Flugzeugantriebseinheit mit einem Gasturbinenkerntriebwerk (10) und zumindest jeweils einem Verdichter, einer Brennkammer und einer eine Hauptwelle (11) antreibenden Turbine, **dadurch gekennzeichnet, dass** die Hauptwelle (11) des Gasturbinenkerntriebwerks (10) über eine mechanische Antriebsverbindung mit zumindest zwei separaten Gebläsen (6-9) betriebsverbunden ist, welche jeweils neben dem Gasturbinenkerntriebwerk (10) angeordnet sind.

2. Flugzeugantriebseinheit nach Anspruch 1, **dadurch gekennzeichnet, dass** die Hauptwelle (11) zur Aufteilung der bereitgestellten Leistung des Gasturbinenkerntriebwerks (10) mit einem Zentralgetriebe gekoppelt ist, welches mindestens zwei Hilfswellen (13) antreibt, wobei über jede der Hilfswellen (13) eine Teilleistung mit Hilfe eines Hilfsgetriebes an eine Antriebswelle einer Gebläseeinheit (6-9) übertragen wird.

3. Flugzeugantriebseinheit nach Anspruch 1 oder 2, **dadurch gekennzeichnet, dass** jede Gebläse-Einheiten (6-9) und das Gasturbinenkerntriebwerk (10) durch eine gemeinsame Rahmenstruktur miteinander verbunden sind.

4. Flugzeugantriebseinheit nach einem der Ansprüche 1 bis 3, **dadurch gekennzeichnet, dass** jede Gebläse-Einheit (6-9) mindestens eine Schaufelreihe von Rotorschaufeln aufweist und ein- oder auch mehrstromig konfiguriert ist.

5. Flugzeugantriebseinheit nach einem der Ansprüche 1 bis 3, **dadurch gekennzeichnet, dass** jede Gebläse-Einheit (6-9) mindestens zwei gegenläufige Rotorschaufelreihen aufweist und ein- oder mehrstromig konfiguriert ist.

6. Flugzeugantriebseinheit nach einem der Ansprüche 1 bis 5, **dadurch gekennzeichnet, dass** mindestens eines der zur Leistungverteilung notwendigen Getriebe innerhalb der Rahmenstruktur ausgebildet ist.

7. Flugzeugantriebseinheit nach einem der Ansprüche 1 bis 6, **dadurch gekennzeichnet, dass** das Zentralgetriebe so ausgebildet ist, dass sich bei Betrachtung der einzelnen Hilfswellen (13) entlang ihrer Achse auf das Zentralgetriebe hin eine gleichsinnige Drehrichtung mindestens zweier Hilfswellen (13) ergibt.

8. Flugzeugantriebseinheit nach einem der Ansprüche 1 bis 6, **dadurch gekennzeichnet, dass** das Zentralgetriebe so ausgebildet ist, dass sich bei Betrachtung der einzelnen Hilfswellen (13) entlang ihrer Achse auf das Zentralgetriebe hin eine gegensinnige Drehrichtung mindestens zweier Hilfswellen (13) ergibt.

9. Flugzeugantriebseinheit nach einem der Ansprüche 1 bis 8, **dadurch gekennzeichnet, dass** die einzelnen Hilfsgetriebe so ausgebildet sind, dass sich bei Betrachtung der Flugantriebseinheit von vorn in Durchströmungsrichtung ein gegenläufiger Drehsinn mindestens zweier Gebläse-Antriebswellen (14) ergibt.

10. Flugzeugantriebseinheit nach einem der Ansprüche 1 bis 8, **dadurch gekennzeichnet, dass** die einzelnen Hilfsgetriebe so ausgebildet, dass sich bei Betrachtung der Flugantriebseinheit von vorn in Durchströmungsrichtung ein gleichläufiger Drehsinn mindestens zweier Gebläse-Antriebswellen (14) ergibt.

11. Flugzeugantriebseinheit nach einem der Ansprüche 1 bis 10, **dadurch gekennzeichnet, dass** die Drehachsmittelpunkte der Gebläse-Einheiten (6-9) vom Drehachsmittelpunkt des Gasturbinenkerntriebwerks (10) im Wesentlichen um den gleichen Abstand versetzt angeordnet sind.

12. Flugzeugantriebseinheit nach einem der Ansprüche 1 bis 11, **dadurch gekennzeichnet, dass** die Drehachsmittelpunkte der Gebläse-Einheiten (6-9) und des Gasturbinenkerntriebwerks (10) eine gerade Linie bilden.

13. Flugzeugantriebseinheit nach einem der Ansprüche 1 bis 12, **dadurch gekennzeichnet, dass** Luft für das Gasturbinenkerntriebwerk durch einen zwischen den Gebläse-Einheiten (6-9) angeordneten Außenstaueinlauf zugeführt wird und durch einen Kanal zum Eintritt des Gasturbinenkerntriebwerks geführt wird.

14. Flugzeugantriebseinheit nach einem der Ansprüche 1 bis 12, **dadurch gekennzeichnet, dass** die Luft für das Gasturbinenkerntriebwerk im Inneren mindestens einer Gebläse-Einheit (6-9) stromab einer Rotor- oder Statorschaufelreihe durch mindestens eine Öffnung am Strömungspfad entnommen und durch einen gekrümmten Kanal (12) zum Eintritt des Gasturbinenkerntriebwerks geführt wird,

15. Flugzeugantriebseinheit nach einem der Ansprüche 1 bis 14, **dadurch gekennzeichnet, dass** die Luft für das Gasturbinenkerntriebwerk durch mindestens eine Öffnung an im Strömungspfad stehenden Elementen wie Statorschaufeln oder Streben entnommen und durch einen gekrümmten Kanal zum Eintritt des Gasturbinenkerntriebwerks geführt wird.
